## Europäisches Patentamt

## European Patent Office

## Office européen des brevets

(19)

(11) Veröffentlichungsnummer: **0 149 793**
**B1**

(12) # EUROPÄISCHE PATENTSCHRIFT

(45) Veröffentlichungstag der Patentschrift:
**22.06.88**

(51) Int. Cl.⁴: **H 04 B 3/14**

(21) Anmeldenummer: **84115318.2**

(22) Anmeldetag: **12.12.84**

(54) Laufzeitentzerrer mit stetig oder stufig veränderbarer Laufzeitcharakteristik.

(30) Priorität: **20.01.84 DE 3401985**

(43) Veröffentlichungstag der Anmeldung:
**31.07.85 Patentblatt 85/31**

(45) Bekanntmachung des Hinweises auf die Patenterteilung:
**22.06.88 Patentblatt 88/25**

(84) Benannte Vertragsstaaten:
**AT BE CH DE FR GB IT LI NL SE**

(56) Entgegenhaltungen:
**DE - A - 2 364 249**
**DE - A - 2 535 257**
**FR - A - 2 234 717**
**GB - A - 2 135 857**

**PATENTS ABSTRACTS OF JAPAN, Band 6, Nr. 164 (E-127)[1042], 27. August 1982, Seite 83E127; JP-A-57 83915 (FUJITSU K.K.) 26.05.1982**
**ELECTRICAL DESIGN NEWS, Band 22, Nr. 7, 5. April 1977, Seiten 74-77, Denver, US; C.R. HOFFMAN: "Develop your own effective delay-distortion equalizer"**

(73) Patentinhaber: **Siemens Aktiengesellschaft Berlin und München, Wittelsbacherplatz 2, D-8000 München 2 (DE)**

(72) Erfinder: **Pfitzenmaier, Gerhard, Dr.-Ing., Eschenrieder Strasse 21, D-8038 Gröbenzell (DE)**

## Beschreibung

Die Erfindung betrifft einen Laufzeitentzerrer gemäss dem Oberbegriff des Patentanspruchs 1.

Zur Optimierung von Nachrichtenübertragungssystemen werden oft eine konstante Betriebsdämpfung und eine konstante Gruppenlaufzeit in den Übertragungsfrequenzbereichen angestrebt. Da jedoch die selektiven Komponenten solcher Systeme in der Regel sowohl Verzerrungen der Betriebsdämpfung als auch der Gruppenlaufzeit verursachen, sind Entzerrerschaltungen vorzusehen, welche die entsprechenden Kurvenverläufe jeweils zu einem konstanten Wert ergänzen.

Aus mancherlei Gründen wird oft die stufenlose oder schrittweise einstellbare Veränderbarkeit der Entzerrerkurve gewünscht, vorzugsweise dergestalt, dass bei allen Entzerrereinstellungen die bei einer oder mehreren Frequenzen definierten Funktionswerte unverändert bleiben, also sogenannte Dreh- oder Fixpunkte bilden.

Während dieses Problem bezüglich der Betriebsdämpfung z.B. durch die «Bode-Entzerrer» weitgehend gelöst ist (H.W. Bode, BSTJ 1938, S. 229–244), sind entsprechende Schaltungen zur Regelung der Gruppenlaufzeit mit Fixpunkten bisher nicht bekannt.

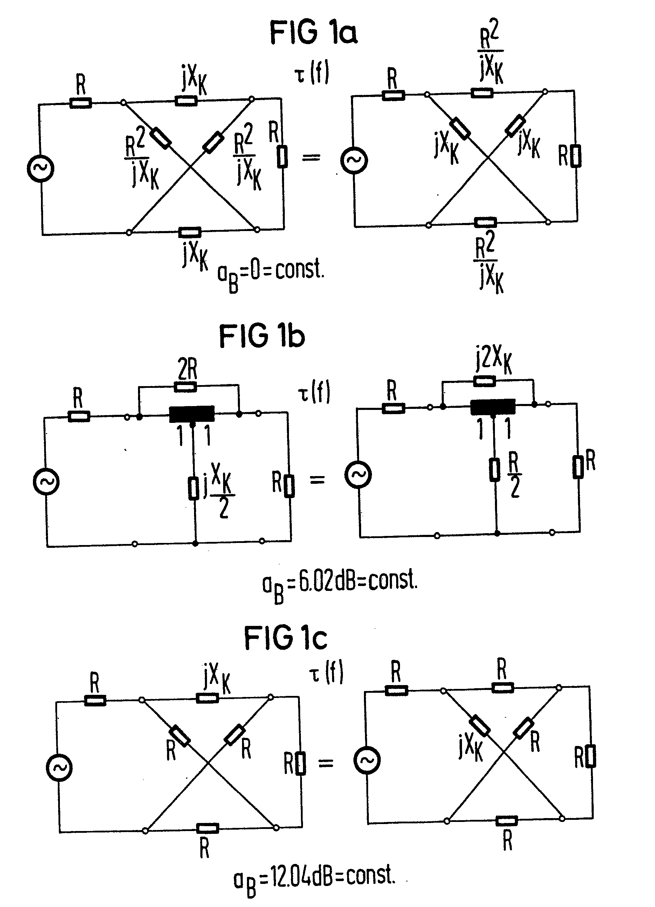

Dem Stand der Technik entsprechende Laufzeitentzerrer sind Allpässe, die durch die Kettenschaltung von Elementar-Allpass-Gliedern oder durch ein Allpassglied höherer Ordnung realisiert werden, wobei der Aufwand von der angestrebten Entzerrungsgenauigkeit abhängt (Saal/Antreich, Frequenz 16, 1962, S. 469–477). In bekannter Weise, z.B. in dem Buch von Temes/La Patra, «Introduction to Circuit Synthesis and Design», Mac Graw Hill Book Co 1977, S. 248, sind realisierende Schaltungen für Allpässe von der symmetrischen Brücke (Kreuzglied) abgeleitet; zur Erzeugung eines Allpasses mit der Betriebsdämpfung $a_B = 0$ müssen günstigstenfalls jeweils zwei zueinander duale Brückenreaktanzen verwirklicht werden (Fig. 1a). Kann eine frequenzunabhängige Betriebsdämpfung von $a_B = 6,02$ dB, bzw. von $a_B = 12,04$dB hingenommen werden, so wird in bekannter Weise bei unveränderter Laufzeitcharakteristik eine der beiden Reaktanzen durch einen ohmschen Widerstand ersetzt (Fig. 1b und 1c: sogenannte Darlington-Allpässe).

Die Parameter der 6,02 dB, bzw. von $a_B = 12,04$ dB hingenommen werden, so wird in bekannter Weise bei unveränderter Laufzeitcharakteristik eine der beiden Reaktanzen durch einen ohmschen Widerstand ersetzt (Fig. 1b und 1c: sogenannte Darlington-Allpässe).

Die Parameter der Elementar-Allpassglieder werden in einem Optimierungsprozess bestimmt. Eine Veränderbarkeit der Entzerrungscharakteristik ist nur begrenzt möglich durch Verstimmen einzelner Bauelemente. Die von der Entzerrereinstellung unabhängige Erzeugung von Fixpunkten der Laufzeit bei definierten Referenzfrequenzen stellt bei der Optimierung einen zusätzlichen und meist schwer beherrschbaren Zwang dar.

Eine andere praktizierte Möglichkeit der Laufzeitvariation besteht darin, dass in einer Kettenschaltung von Allpassgliedern einzelne Allpassglieder je nach den Erfordernissen durch andere – nach Art eines Baukastensystems – gezielt ersetzt werden.

Solche Massnahmen sind umständlich, unflexibel, zeit- und damit kostenaufwendig, elektrisch ungünstig wegen wechselnder Anschlussbedingungen, platzverbrauchend wegen der notwendigen Lagerhaltung der Einzelbausteine und bergen überdies die Gefahr von Fehlschaltungen in sich. Laufzeitfixpunkte bei gewünschten Referenzfrequenzen sind nicht oder nur mit mangelnder Genauigkeit zu erzielen.

Der Erfindung liegt die Aufgabe zugrunde, den vorstehend geschilderten Schwierigkeiten abzuhelfen und Möglichkeiten zur Realisierung von Entzerrerschaltungen anzugeben, bei denen eine verhältnismässig grosse Freizügigkeit für den Entwurf der Schaltung gegeben ist und Laufzeitfixpunkte bei gewünschten Referenzfrequenzen mit ausreichender Genauigkeit zu erzielen sind, und darüber hinaus die Möglichkeit gegeben ist, im Fixpunkt eine nach Betrag und Richtung vorgebbare einstellungsunabhängige Laufzeitteilheit zu realisieren.

Gemäss der Erfindung wird diese Aufgabe für Laufzeitentzerrer nach dem Oberbegriff des Patentanspruchs 1 gemäss den Merkmalen des kennzeichnenden Teiles des Patentanspruchs 1 gelöst.

Vorteilhafte Ausgestaltungen sind in den Unteransprüchen angegeben.

Gemäss der Erfindung wird von der Überlegung ausgegangen, Laufzeitentzerrer mit stetig oder stufig veränderbarer Laufzeitcharakteristik und $n \geqslant 1$ Fixpunkten der Laufzeit bei den Frequenzen $\eta_{Fv}$ dadurch zu bilden, dass in den bekannten Grundschaltungen von Laufzeitentzerrern mit verschwindender oder endlicher, aber konstanter Betriebsdämpfung die aus Induktivitäten, Kapazitäten und Abschnitten von Übertragungsleitungen bestehende Kreuzglied-Reaktanz $jx_K(\eta)$ oder Kreuzglied-Suszeptanz $jy_K(\eta)$

$$\left.\begin{array}{l} jx_K(\eta) \\ jy_K(\eta) \end{array}\right\} = j(\eta^2 - \eta^2_{Fv}) \cdot x^*_{Kv}(\eta), \quad v = 1\ldots n \quad (2)$$

bei den Frequenzen $\eta_{Fv}$ der Laufzeit-Fixpunkte einstellungsunabhängige Nullstellen aufweist und gleichzeitig gewährleistet ist, dass bei diesen Fequenzen die jeweiligen Restfunktionen $x_{Fv}^*(\eta_{Fv})$, die durch Streichen der entsprechenden Nullstellen-Klammer $(\eta^2 - \eta^2_{Fv})$ entstehen, einstellungsunabhängig konstant sind.

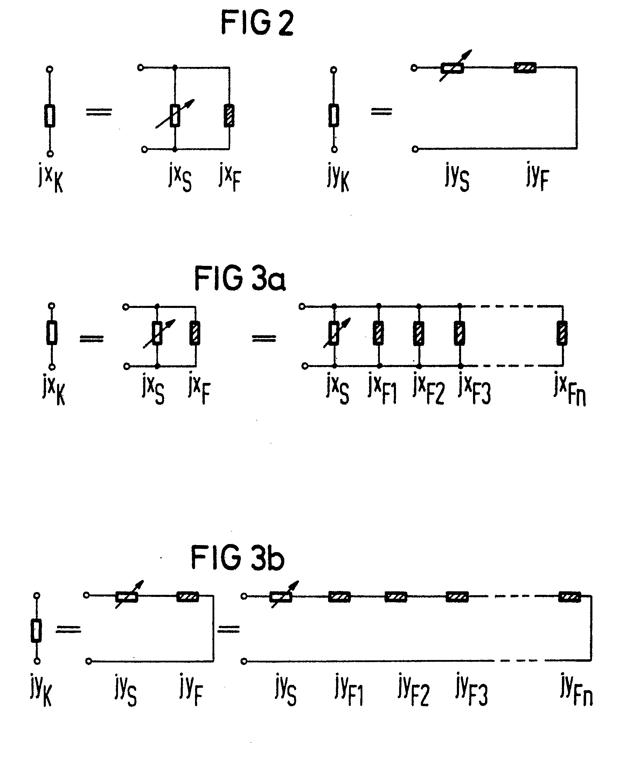

Bei technisch besonders vorteilhaften Lösungen, bei denen die Erfüllung der oben genannten Bedingungen immer gewährleistet ist, ist dafür gesorgt, dass die Kreuzgliedreaktanz $x_K(\eta)$ zur Erzielung von $n(\geqslant 1)$ Laufzeitfixpunkten gemäss Fig. 2 aus der Parallelschaltung von zwei Reaktanzen $x_S(\eta)$ und $x_F(\eta)$ besteht, dergestalt, dass die mit $x_S(\eta)$ bezeichnete Reaktanz neben eventu-

ellen Festelementen die zur Variation der Laufzeitcharakteristik nötigen variablen Schaltelemente enthält – diese Reaktanz wird im weiteren Verlauf als Steuerreaktanz bezeichnet – die mit $x_F(\eta)$ bezeichnete Reaktanz Nullstellen bei jenen n Referenzfrequenzen $\eta_{Fv}$ aufweist, bei denen Laufzeit-Fixpunkte auftreten sollen – diese Reaktanz wird im weiteren Verlauf als Festreaktanz bezeichnet und enthält im Gegensatz zur Steuerreaktanz keine variablen Elemente.

Die obigen Aussagen gelten sinngemäss (s. Gleichung (2) ) in gleicher Weise, wenn die Begriffe «Steuerreaktanz $x_S(\eta)$, Festrekatanz $x_F(\eta)$, Parallelschaltung» durch die Begriffe «Steuersuszeptanz $y_S(\eta)$, Festsuszeptanz $y_F(\eta)$, Serienschaltung» ersetzt werden. Im Folgenden wird jeweils nur auf die Lösung mit Reaktanzen verwiesen, die Lösung mit Suszeptanzen ist jedoch in gleicher Weise Bestandteil der Erfindung.

Der absolute Wert eines Laufzeit-Fixpunktes ist durch die erste Ableitung der Festreaktanz nach der Frequenz bei der aktuellen Referenzfrequenz bestimmt – unabhängig von der Einstellung der Steuerreaktanz.

Es ist zweckmässig, die Festreaktanz mit n Nullstellen in die Parallelschaltung von $m \geqslant 1$ Teil-Festreaktanzen aufzuspalten, wobei ein besonders vorteilhafter Fall dadurch gegeben ist, dass die Festreaktanz mit n Nullstellen in die Parallelschaltung von n Teil-Festreaktanzen mit je einer Nullstelle aufgespalten wird, da dann ein eindeutiger Zusammenhang zwischen der v.Teil-Festreaktanz und dem Laufzeitwert (Fixpunkt) bei der v.Referenzfrequenz besteht – unabhängig von den anderen Teil-Festreaktanzen und der Steuerreaktanz.

Weiterhin ist es möglich, den Wert der Steuerreaktanz bei einer Referenzfrequenz (Frequenz eines Fixpunktes) eindeutig durch die bei dieser Frequenz vorschreibbare Laufzeitsteigung und die erste und zweite Ableitung der gewählten Festreakatanz nach der Frequenz bei der aktuellen Referenzfrequenz anzugeben.

Aus dieser Erkenntnis sind variable Laufzeitentzerrer mit folgenden Eigenschaften ableitbar. Eine Schar von Laufzeitkurven besitzt bei wenigstens einer vorgebbaren Referenzfrequenz den gleichen vorgebbaren Laufzeitwert und simultan die gleiche vorgebbare Laufzeitsteigung in diesem Fixpunkt. Darüber hinaus ist eine Variation der Laufzeitteilheit im Fixpunkt für eine Schar von Laufzeitkurven mit jeweils konstanter Laufzeitsteigung im Fixpunkt möglich.

Anhand von Ausführungsbeispielen wird nachstehend die Erfindung noch näher erläutert.

Es zeigen in der Zeichnung

Fig. 1a, b, c, eine Allpassschaltung mit verschwindender, bzw. konstanter, endlicher Betriebsdämpfung bei jeweils gleichem Laufzeitverhalten;

Fig. 2 eine Aufteilung der Kreuzgliedereaktanz $x_K(\eta)$ in die Parallelschaltung einer Festreaktanz $X_F(\eta)$ und einer Steuerreaktanz $X_S(\eta)$, bzw. der Kreuzgliedsuszeptanz $Y_K(\eta)$ in die Serienschaltung einer Festsuszeptanz $Y_F(\eta)$ und einer Steuersuszeptanz $Y_S(\eta)$;

Fig. 3a, b, eine Aufteilung der Festreaktanz in n parallelgeschaltete Teil-Festreaktanzen, bzw. der Festsuszeptanz in n seriengeschaltete Teil-Festsuszeptanzen;

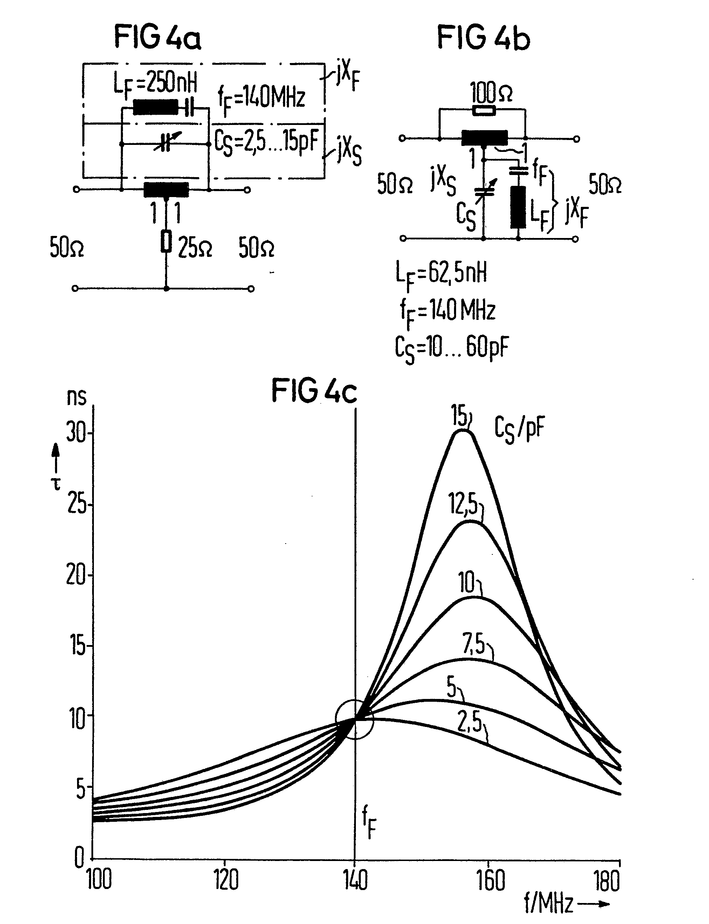

Figl 4a, b, c, Laufzeitkurven mit einem Fixpunkt; als Beispiele für mögliche Schaltungen gem. der Erfindung sind zwei gleichwertige Varianten angegeben, wobei in Fig. 4c in Abhängigkeit von der Frequenz f die Laufzeit $\tau$ bei Änderung von $C_s$ in der Schaltung von Fig. 4a gezeigt ist;

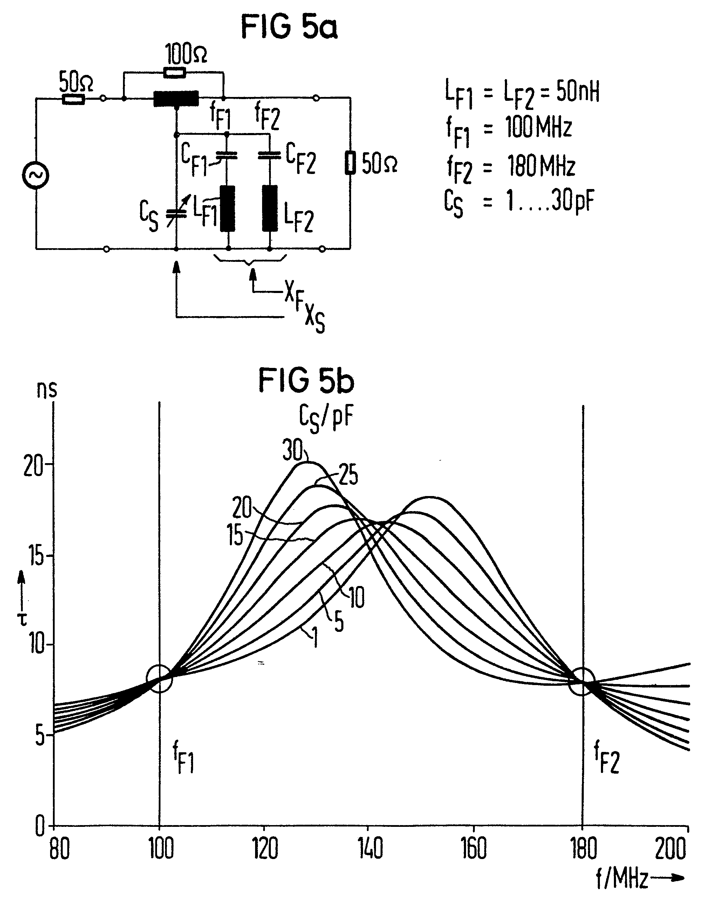

Fig. 5a, b, eine erfindungsgemässe Schaltung als Beispiel zur Erzeugung einer ebenfalls dargestellten Schar (Fig. 5b) von Laufzeitkurven ($\tau$) mit zwei Fixpunkten $f_{F1}$ und $f_{F2}$;

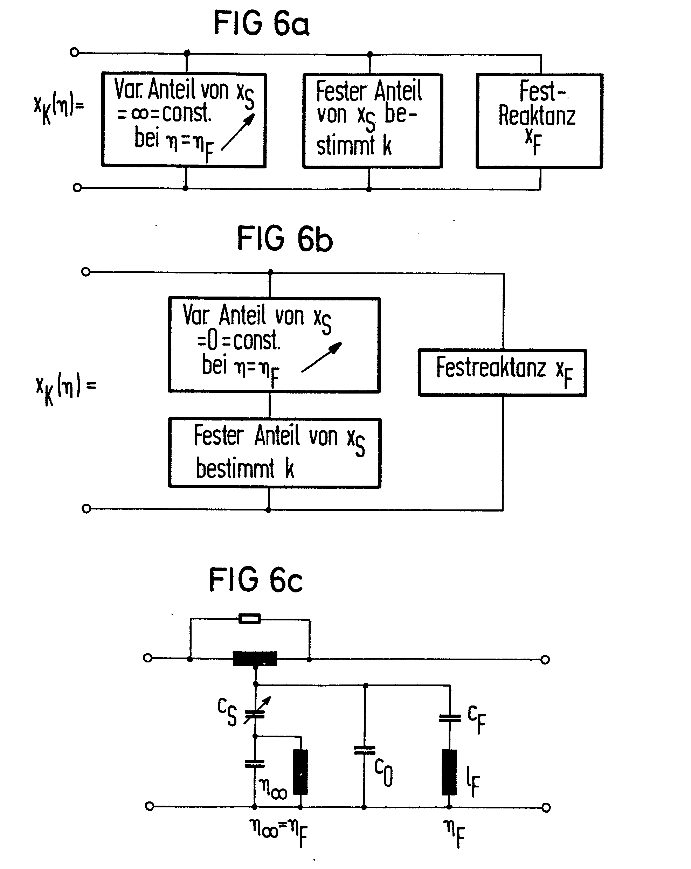

Fig. 6a, b, c, beispielsweise Prinzipschaltungen zur Erzeugung von konstanten Laufzeitsteilheiten im Fixpunkt (a) durch Parallelaufspaltung, (b) durch Serienaufspaltung der Steuerreaktanz, (c) ein Realisierungsbeispiel zu (a);

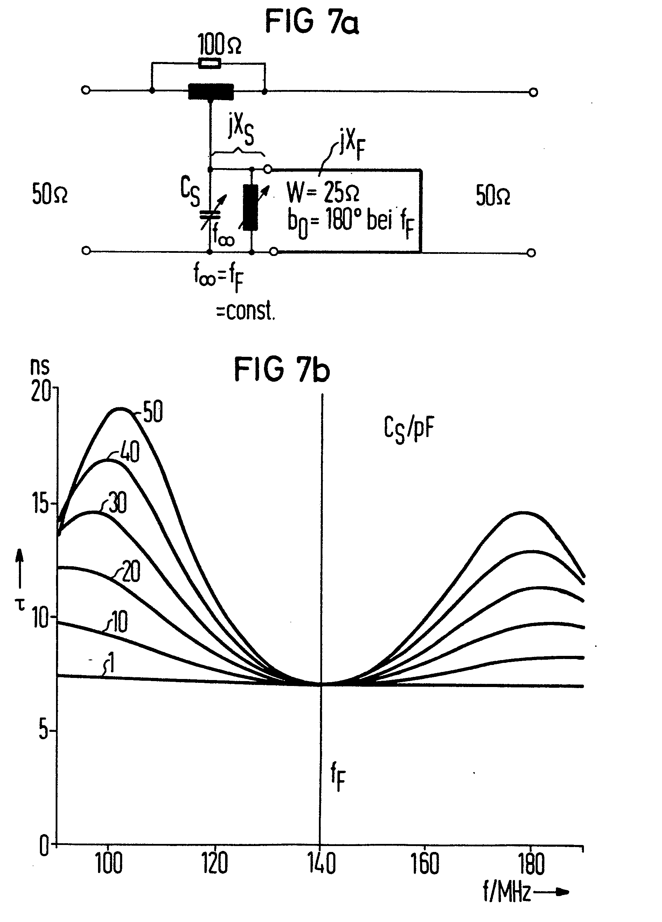

Fig. 7a, b, ein Anwendungsbeispiel für eine Laufzeitschar ($\tau = \tau$ (f) ) mit horizontaler Tangente im Fixpunkt; Wellenwiderstand der Leitung W = 25 $\Omega$;

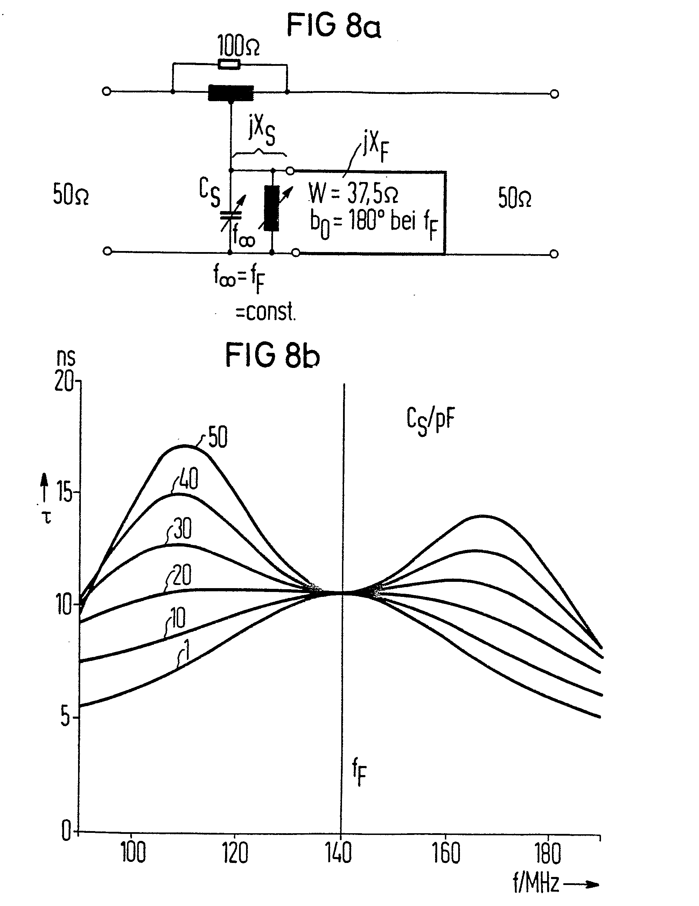

Fig. 8a, b, ein Anwendungsbeispiel für eine Laufzeitschar mit horizontaler Tangente im Fixpunkt; Wellenwiderstand der Leitung W = 37,5 $\Omega$;

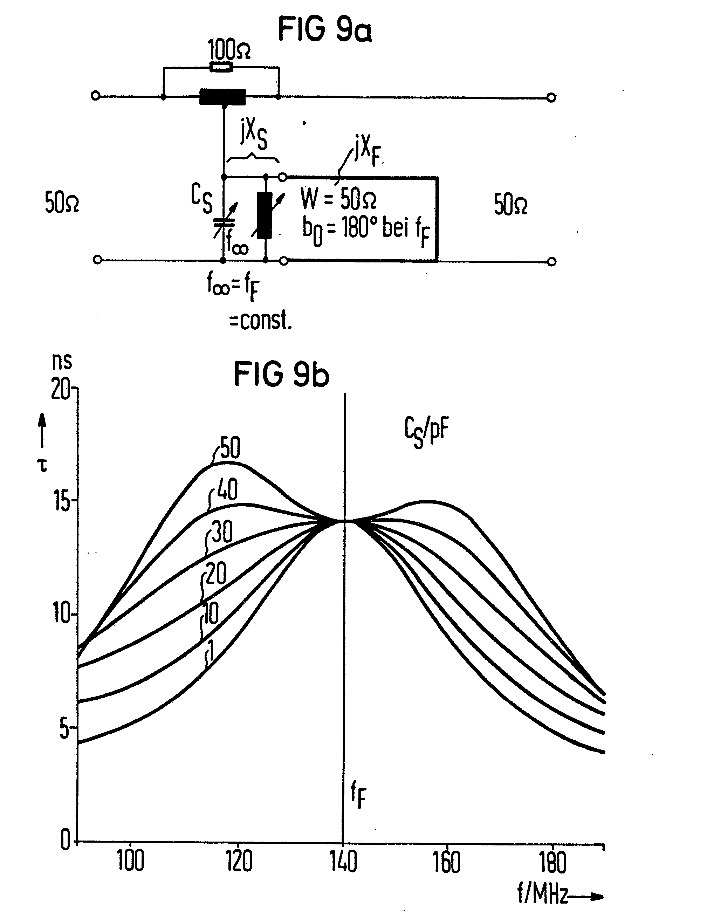

Fig. 9a, b, ein Anwendungsbeispiel für eine Laufzeitschar mit horizontaler Tangente im Fixpunkt; Wellenwiderstand der Leitung W = 50 $\Omega$;

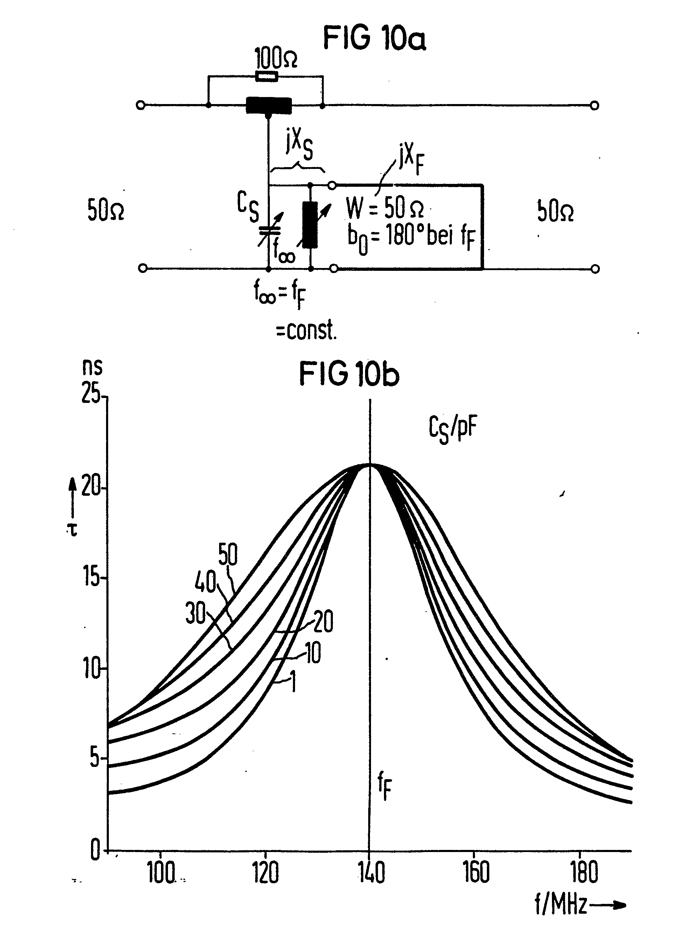

Fig. 10a, b, ein Anwendungsbeispiel für eine Laufzeitschar mit horizontaler Tangente im Fixpunkt; Wellenwiderstand der nicht veränderbaren Leitung W = 75 $\Omega$;

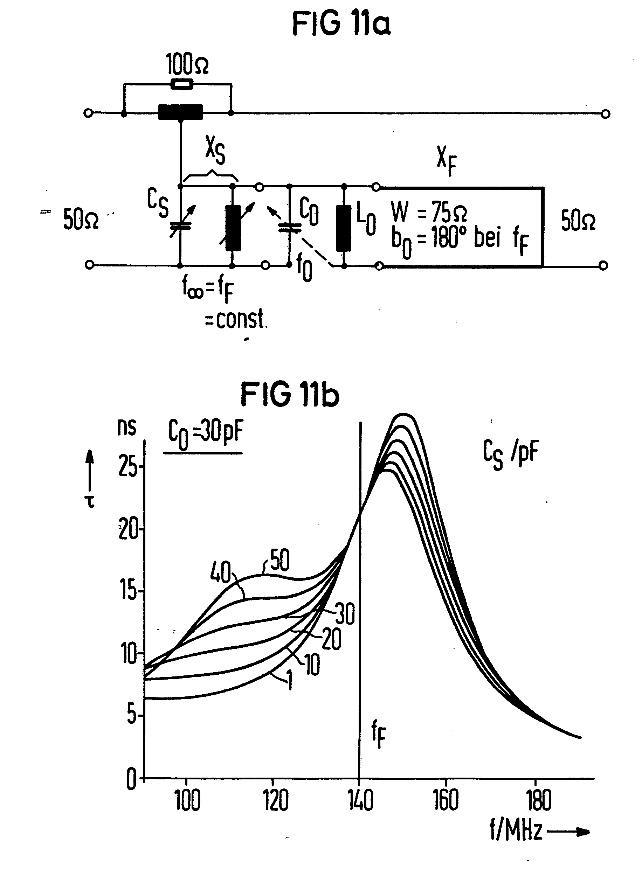

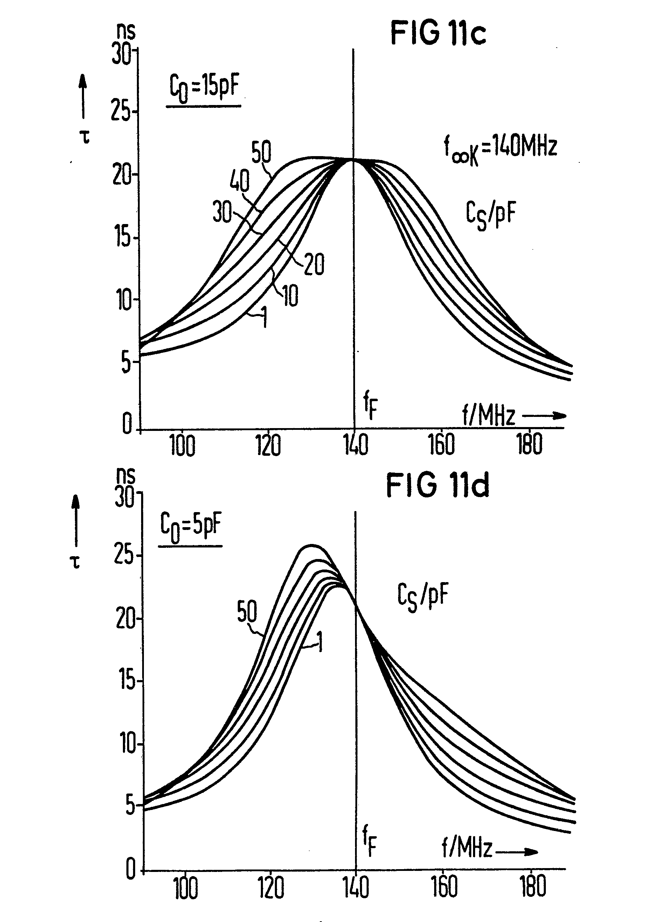

Fig. 11a, b, c, d, eine Variation der Laufzeitsteilheit im Fixpunkt für eine Schar von Laufzeitkurven mit jeweils konstanter Laufzeitsteigung im Fixpunkt als 1. Beispiel;

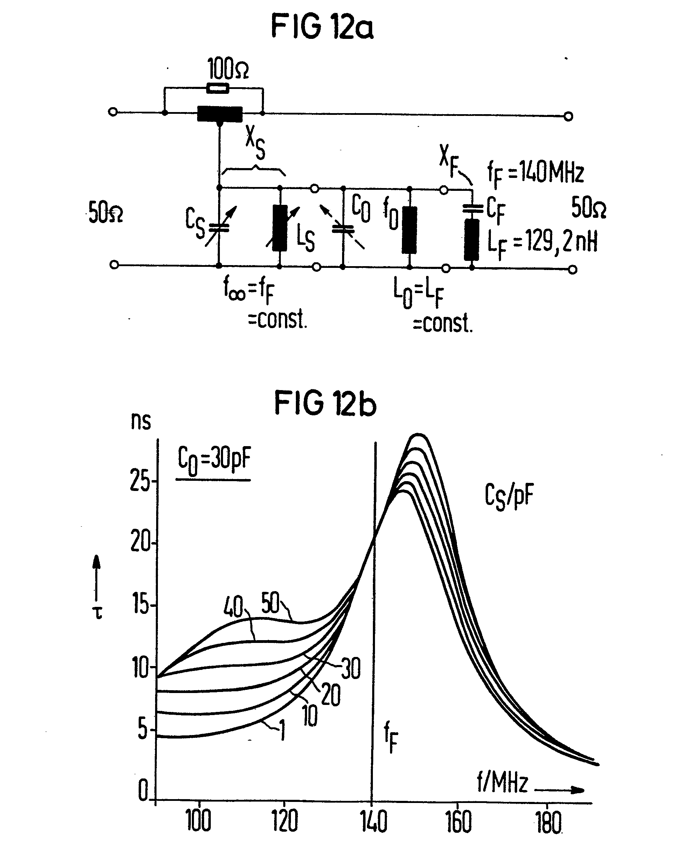

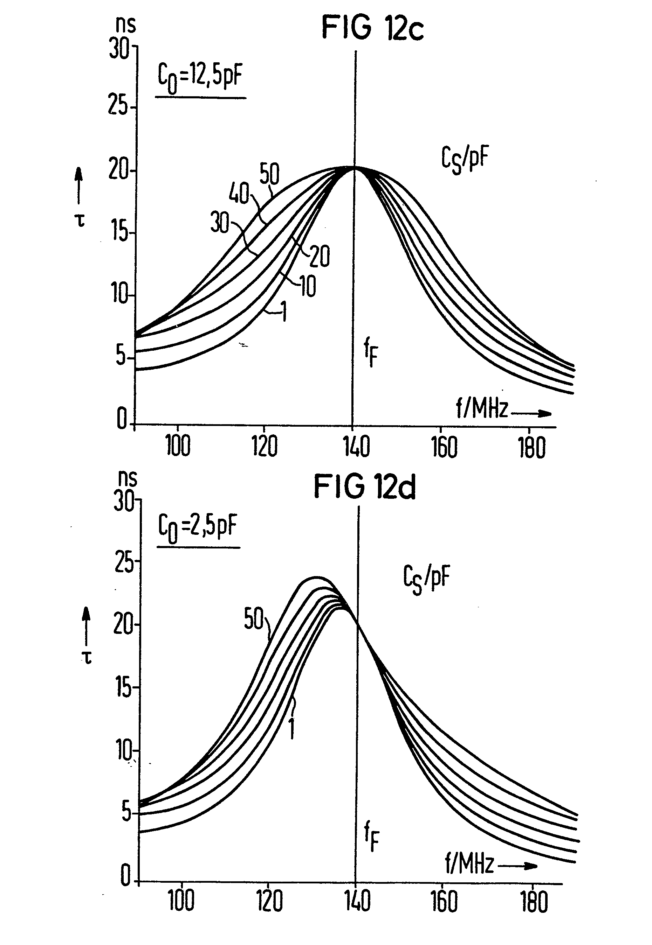

Fig. 12a, b, c, d, eine Variation der Laufzeitsteilheit im Fixpunkt für eine Schar von Laufzeitkurven mit jeweils konstanter Laufzeitsteigung im Fixpunkt als 2. Beispiel.

Wie bereits einleitend bemerkt, sind in den Fig. 1a, b und c bekannte Schaltungen gezeigt. Dabei zeigt Fig. 1a ein sog. Kreuzglied, dessen Betriebsdämpfung $a_B = 0$ const. ist. Im Längs- bzw. Diagonalzweig sind die Blindwiderstände $jX_K$ bzw. $R^2/jX_K$ enthalten, wobei R den Innenwiderstand der Stromquelle bzw. den Abschlusswiderstand der Schaltung darstellt.

In Fig. 1b und c sind bezüglich der Laufzeit wirkungsgleiche Allpässe zu Fig. 1a gezeichnet. Die Schaltung von Fig. 1b enthält einen Übertrager mit dem Übersetzungsverhältnis 1:1, der entweder mit dem zugehörigen Wirkwiderstand 2R oder dem zugehörigen Blindwiderstand $j2X_K$ überbrückt ist; ebenso muss im Querzweig der Blindwiderstand $jX_K/2$ bzw. der Wirkwiderstand R/2 vorhanden sein. Diese Schaltung hat eine Dämpfung von $a_B = 6,02$ dB = const. In Fig. 1c ist eine Kreuzschaltung mit dem Blindwiderstand $jX_K$ bzw. dem Wirkwiderstand R im Längs- bzw. Diagonalzweig gezeichnet. Diese Schaltung hat eine Dämpfung von $a_B$ = 12,04 dB = const. Die Schaltungen nach Fig. 1a und b werden bekanntlich auch als sog. Darlington-Allpass bezeichnet.

In Fig. 2 ist zu erkennen, wie die Reaktanz $jx_K$ in die Parallelschaltung einer steuerbaren Reaktanz $jx_S$ und einer Festreaktanz $jx_F$ aufgeteilt wird. Analog gilt dies auch für die in Fig. 2 ebenfalls dargestellte Kreuzgliedsuszeptanz $jy_K$, die in die Serienschaltung aus einer Steuersuszeptanz $jy_S$ und einer Festsuszeptanz $y_F$ unterteilt wird.

In Fig. 3a bzw. b wird die Festreaktanz $jx_F$ in mehrere parallel geschaltete Teilfestreaktanzen $jx_{Fl}$. . .$jx_{Fn}$ unterteilt bzw. analog dazu die Festreaktanz $jy_F$ in in Serie geschaltete Teilfestsuszeptanzen $jy_{Fl}$. . .$jy_{Fn}$ unterteilt.

Bei der Schaltung nach Fig. 4a besteht die Steuerreaktanz $X_S$ aus einem Steuerkondensator $C_S$, während die Festreaktanz $jX_F$ aus einem Serienresonanzkreis besteht. Der Serienresonanzkreis und der Kondensator $C_S$ sind zueinander parallel geschaltet und liegen im Überbrückungszweig der Entzerrerschaltung, in deren Querzweig ein Widerstand von 25 Ohm liegt. Ein weiteres Beispiel gem. Fig. 4b enthält im Überbrückungszweig einen Wirkwiderstand mit 100 Ohm, während die zugehörige Steuerreaktanz $C_S$ und die zugehörige Festreaktanz $jX_F$ als Parallelschaltung im Querzweig des Entzerrers liegen. Die Fig. 4c zeigt, wie sich bei der Frequenz 140 MHz ein Fixpunkt $f_F$ der Laufzeit mit 10 ns unabhängig von einer Änderung von $C_S$ in der Schaltung von Fig. 4a erreichen lässt.

In der Schaltung von Fig. 5a liegt im Überbrückungszweig des Übertragers ein Widerstand von 100 Ohm. Im Querzweig liegt der veränderbare Kondensator $C_S$ als Steuerreaktanz $X_S$. Als Festreaktanzen sind zwei zum Kondensator $C_S$ parallelgeschaltete Serienresonanzkreise vorgesehen, deren Serienresonanz die Laufzeitfixpunkte – im Beispiel 8 ns – bei den Frequenzen $f_{Fa}$ und $f_{F2}$ festlegen. Diese Fixpunkte bleiben gem. Fig. 5b bei der Änderung von $C_S$ erhalten.

In den Fig. 6a, 6b sind gewissermassen mögliche Prinzipschaltungen dargestellt, nach denen bei der Berechnung vorgegangen werden kann, während Fig. 6c ein Ausführungsbeispiel zeigt. $C_S$ bestimmt die Formgebung der Kurvenschar bei konstanter Laufzeitsteilheit k in $\eta_F$, $t_F$.

Der Kondensator $C_O$ bestimmt die Laufzeitsteigung k in $\eta_F$, $t_F$. Wird auch $C_O$ variabel ausgebildet, so kann die durch Variation von $C_S$ erzeugte Schar von Laufzeitkurven im Fixpunkt so gedreht werden, dass wiederum alle Kurven in $\eta_F$, $t_F$ die gleiche von der $C_O$-Einstellung abhängige Laufzeitsteilheit aufweisen.

In der Schaltung von Fig. 7a ist der Übertrager mit einem Wirkwiderstand von 100 Ohm überbrückt. Im Querzweig liegt als Steuerreaktanz $jX_S$ ein Parallelresonanzkreis aus einem Kondensator $C_S$ und einer einstellbaren Spule. Die zugehörige Festreaktanz ist eine kurzgeschlossene Leitung mit einem Wellenwiderstand W = 25 Ω und einer Phase $b_O$ = 180° bei der Frequenz $f_F$. Das zugehörige Laufzeitdiagramm zeigt die der Schaltungsbemessung zugrunde gelegte horizontale Laufzeittangente im Fixpunkt $f_F$ und ist in Fig. 7b dargestellt.

Die Schaltung von Fig. 8a ist zu der von Fig. 7a praktisch gleichartig aufgebaut, jedoch mit anderen Schaltelementewerten. Ihre Wirkung ist bei Änderung von $C_S$ in Fig. 8b dargestellt.

Eine analoge weitere Schaltungsvariante zeigt Fig. 9a und es lassen sich gem. Fig. 9b auch mit dieser Schaltung Laufzeitscharen mit horizontaler Tangente im Fixpunkt $f_F$ bei Änderung von $C_S$ erreichen.

Ein weiteres Anwendungsbeispiel ähnlich zu Fig. 9a zeigt auch die Schaltung nach Fig. 10a und es ist in Fig. 10b die Laufzeit $\tau$ in Abhängigkeit von der Frequenz f dargestellt, wobei der Kondensator $C_S$ zwischen 1 pF und 50 pF geändert wird und der Laufzeitfixpunkt $f_F$ bei 140 MHz liegt.

Das Vorstehende gilt entsprechend auch für die Schaltung nach Fig. 11a. Der Querzweig ist jedoch – ohne prinzipielle Änderung der Schaltungsstruktur – erweitert durch die Parallelschaltung einer Spule $L_O$ und eines einstellbaren Kondensators $C_O$. Die Steuerreaktanz $X_S$ bewirkt also eine Änderung der Kurvenform bei konstanter Steilheit im Laufzeitfixpunkt $f_F$. Durch eine Änderung des Kondensators $C_O$ wird eine Änderung der Laufzeitsteilheit im Fixpunkt $f_F$ erreicht. Die zugehörigen Kurven sind für unterschiedliche Werte für $C_O$ in den Fig. 11b, 11c und 11d dargestellt.

Auch für die Schaltung nach Fig. 12a gilt das Vorstehende, jedoch besteht die Festreaktanz $X_F$ aus einem Serienresonanzkreis und nicht aus einer Leitung. Die Änderung der Laufzeitsteilheit erfolgt wiederum mit dem Kondensator $C_O$ und die Änderung der Kurvensteilheit bei konstanter Laufzeitsteilheit im Fixpunkt $f_F$ erfolgt mit der Steuerreaktanz $X_S$.

Zur weiteren detaillierten Erläuterung sei noch folgendes ausgeführt.

Die nachfolgenden Berechnungen werden normiert ausgeführt; es gilt der übliche Zusammenhang zwischen normierten (Kleinbuchstaben) und entnormierten (Grossbuchstaben) Grössen:

Ausgangsgrössen: Bezugswiderstand $R_B$, Bezugsfrequenz $f_B$.

$$\text{Bezugsinduktivität } L_B = \frac{R_B}{2\pi \cdot f_B}$$

$$\text{Bezugskapazität } C_B = \frac{1}{2\pi f_B \cdot R_B}$$

$$\text{Bezugslaufzeit } \tau_B = \frac{1}{2\pi \cdot f_B}$$

$l = L/L_B$; $c = C/C_B$; $r = R/R_B$; $\eta = f/f_B$; $t = \tau/\tau_B$.

An dieser Stelle sei nachdrücklich vermekt, dass der im folgenden gebrauchte Begriff «Reaktanz» im allgemeinsten Sinn zu verstehen ist; demnach sind auch Abschnitte von Übertragungsleitungen, gekennzeichnet durch elektrische Länge $b_O$ bei einer Bezugsfrequenz $f_O$ und Wellenwiderstand Z – insbesondere kurzgeschlossene und leerlaufende Stichleitungen – in beliebigen Kombinationen mit Induktivitäten und Kapazitäten zugelassen.

Die Gruppenlaufzeit $t(\eta)$ lässt sich aus der Kreuzgliedreaktanz $x_K(\eta)$ wie folgt berechnen, z.B. (Frequenz 16 (1962) S. 469–477)

$$t(\eta) = \frac{2}{1 + x_K^2(\eta)} \cdot \frac{dx_K(\eta)}{d\eta} \qquad (1)$$

Aus dieser Beziehung geht hervor, dass die Gruppenlaufzeit nicht nur von der Kreuzgliedreaktanz $x_K$, sondern gleichzeitig von deren Ableitung nach der Frequenz abhängt.

Um zu zeigen, dass die Einhaltung der eingangs angegebenen Gleichung (2) zu einstellungsunabhängigen Fixpunkten $t_{Fv} = t(\eta_{Fv})$ der Laufzeit bei den vorgegebenen Referenzfrequenzen $\eta_{Fv}$ führt, wird die immer in Produktform darstellbare Kreuzglied-Reaktanz $x_K(\eta)$ entsprechend (2) formal zerlegt in das Produkt derjenigen Nullstellenklammer $(\eta^2 - \eta^2_{Fv})$, die der betrachteten Referenzfrequenz $\eta_{Fv}$ entspricht und in eine dadurch definierte multiplikative Restfunktion $x^*_{Kv}(\eta)$, die selbst keine Reaktanzfunktion mehr ist. Zur Bestimmung der Laufzeit $t(\eta_{Fv})$ werden die Produktform (2) der Kreuzglied-Reaktanz und deren erste Ableitung nach der Frequenz

$$\frac{dx_K(\eta)}{d\eta}\bigg|_{\eta = \eta_{Fv}} = 2 \cdot \eta_{Fv} \cdot x^*_{Kv}(\eta_{Fv}) \qquad (3)$$

in (1) eingesetzt:

$$t_{Fv} = t(\eta_{Fv}) = 4 \cdot \eta_{Fv} \cdot x^*_{Kv}(\eta_{Fv}). \qquad (4a)$$

Die Interpretation von (4) liefert folgende Aussage:

Damit die Laufzeit $t_{Fv}$ bei einer vorgegebenen Referenzfrequenz $\eta_{Fv}$ konstant und damit unabhängig von den Einstellungen des variablen Laufzeitentzerrers ist, sind folgende Bedingungen zu erfüllen:

1) Die Kreuzglied-Reaktanz $x_K(\eta)$ oder die Kreuzglied-Suszeptanz $y_K(\eta)$ weist bei der vorgegebenen Referenzfrequenz $\eta_{Fv}$ einstellungsunabhängig eine Nullstelle auf.

2) Die nach dem Wegstreichen der Nullstellenklammer $(\eta^2 - \eta^2_{Fv})$ in (2) verbleibende multiplikative Restfunktion $x^*_{Kv}(\eta)$ ist bei der Referenzfrequenz $\eta_{Fv}$ einstellungsunabhängig konstant.

Mit diesen Bedingungen ist gleichzeitig ein Phasenfixpunkt verbunden, da wegen der durch

$$b(\eta) = 2 \arctan x_K(\eta) \qquad (4b)$$

gegebenen Abhängigkeit der Betriebsphase $b(\eta)$ von der Kreuzgliedreaktanz $jx_K(\eta)$ nach der eingangs genannten Literaturstelle in der Zeitschrift «Frequenz», 1962, eine Nullstelle der letzteren einen Phasenwert von $2\pi$ oder ein Mehrfaches davon zur Folge hat.

Zudem verlaufen alle Phasenkurven einstellungsunabhängig mit gleicher Steilheit durch den Phasenfixpunkt, da voraussetzungsgemäss die Laufzeit im Fixpunkt einstellungsunabhängig konstant ist. Die Verknüpfung von Laufzeit- und Phasenfixpunkt wird durch die Tatsache augenscheinlich, dass die Laufzeitbeziehung $t(\eta)$ durch Differentiation der Phasenbeziehung (4b) entsteht.

Soll der Allpass mehrere Fixpunkte $t_{Fv}$ erzeugen, so muss die entsprechende Kreuzgliedreaktanz die vorerwähnten Bedingungen bei allen vorgegebenen Referenzfrequenzen $\eta_{Fv}$ erfüllen.

Technisch besonders vorteilhafte Lösungen, bei denen die Erfüllung der oben genannten Bedingungen immer gewährleistet ist, sind dann gegeben, wenn die vorstehend für Fig. 2 und Gleichung (2) gegebenen Erläuterungen berücksichtigt werden.

Zum Beweis der obigen Aussagen wird die in Produktform vorliegende Festreaktanz $x_F(\eta)$, die verabredungsgemäss bei der vorgegebenen Referenzfrequenz $\eta_{Fv}$ eine Nullstelle aufweist, entsprechend (2) formal in das Produkt aus der Nullstellenklammer $(\eta^2 - \eta^2_{Fv})$ und einer multiplikativen Restfunktion $x^*_{Fv}(\eta)$ aufgeteilt und die Kreuzglied-Reaktanz $x_K(\eta)$ als Parallelschaltung von Fest- und Steuerreaktanz dargestellt:

$$x_K(\eta) = \frac{(\eta^2 - \eta^2_{Fv}) \cdot x^*_{Fv}(\eta) \cdot x_S(\eta)}{(\eta^2 - \eta^2_{Fv}) \cdot x^*_{Fv}(\eta) + x_S(\eta)} \qquad (5)$$

Die erste Ableitung von $x_K(\eta)$ bezüglich der Frequenz ergibt für $\eta = \eta_{Fv}$:

$$\frac{dx_K(\eta)}{d\eta}\bigg|_{\eta = \eta_{Fv}} = 2 \cdot \eta_{Fv} \cdot x^*_{Fv}(\eta_{Fv}) \qquad (6)$$

Das Einsetzen von (5) und (6) in die Laufzeitformel (1) führt zum Ergebnis

$$t(\eta_{Fv}) = 4 \cdot \eta_{Fv} \cdot x^*_{Fv}(\eta_{Fv}). \qquad (7)$$

Da einerseits die verabredungsgemäss bei $\eta = \eta_{Fv}$ auftretende einstellungsunabhängige Nullstelle der Festreaktanz $x_F(\eta)$ wegen der Parallelschaltung von Fest- und Steuerreaktanz auch eine einstellungsunabhängige Nullstelle der Kreuzgliedreaktanz $x_K(\eta)$ ist und andererseits die Restfunktion $x^*_{Fv}(\eta)$ als Teil der als fest definierten Festreaktanz $x_F(\eta)$ für $\eta = \eta_{Fv}$ einen konstanten Wert besitzt, erhält man für alle Einstellungen der in (7) nicht mehr auftretenden Steuerreaktanz $x_S(\eta)$ den gleichen Laufzeitwert $t_{Fv}$ bei $\eta = \eta_{Fv}$: es handelt sich also um einen Fixpunkt.

Zur Gewinnung weiterer Gesetzmässigkeiten ist es sinnvoll, die Laufzeit nach Gleichung (1) direkt auf die Parallelschaltung von Fest- und Steuerreaktanz anzuwenden – ohne die Festreaktanz als Produkt einer Nullstellenklammer und einer Restfunktion darzustellen.

Zur Vereinfachung werden die Frequenzabhängigkeiten im folgenden nicht gesondert angeschrieben; ' bedeutet die Differentiation nach der Frequenz. Unter Berücksichtigung der getroffenen Vereinbarungen ergibt sich

$$x_K = \frac{x_S \cdot x_F}{x_S + x_F}, \tag{8}$$

$$\frac{dx_K}{d\eta} = \frac{(x_S + x_F) - (x_S \cdot x_F' + x_F \cdot x_S') - x_S \cdot x_F \cdot (x_S' + x_F')}{(x_S + x_F)^2} \tag{9}$$

und über (1) die Laufzeit zu

$$t = 2 - \frac{x_S^2 \cdot x_F' + x_S' \cdot x_F^2}{(x_S + x_F)^2 + x_S^2 \cdot x_F^2} \tag{10}$$

Die Laufzeit $t_{Fv}$ bei der v. Referenzfrequenz $\eta_{Fv}$, bei der voraussetzungsgemäss die Festreaktanz eine Nullstelle aufweist $\{x_F(\eta_{Fv}) = 0\}$, ist dann durch die einfache Beziehung

$$t_{Fv} = t(\eta_{Fv}) = 2 \cdot x_F'(\eta_{Fv}) \tag{11}$$

gegeben. Die Laufzeit ist demnach bei den Nullstellenfrequenzen der Festreaktanz unabhängig von der Steuerreaktanz. Aus dieser Erkenntnis resultiert die praktische Erkenntnis, dass bei allen Einstellungen der veränderbaren Steuerreaktanz $x_S(\eta)$ die diskreten Laufzeitwerte $t_{Fv}$ bei den Referenzfrequenzen $\eta_{Fv}$ unverändert bleiben – Fixpunkte, – wenn nur die Elementewerte der Festreaktanz $x_F(\eta)$ konstant gehalten werden. Die absoluten Laufzeitwerte $t_{Fv}$ werden allein durch die Ableitung der Festreaktanz

$$\frac{dx_F(\eta)}{d\eta}\bigg|_{\eta = \eta_{Fv}} \quad \text{bestimmt.}$$

Zu einer besonders übersichtlichen und vorteilhaften Darstellung gelangt man durch die Aufteilung der n Nullstellen aufweisenden Festreaktanz $x_F(\eta)$ in n parallelgeschaltete elementare Teil-Fixreaktanzen $x_{Fv}(\eta)$ mit jeweils nur einer Nullstelle, wie dies in Fig. 3 schematisch angedeutet ist. Es ist dann eine eindeutige Zuordnung zwischen einer Referenzfrequenz und der entsprechenden Teil-Festreaktanz gegeben.

Es ist leicht einzusehen, dass Gleichung (11) auch für jede Teil-Festreaktanz $x_{F\mu}(\eta)$ alleine gilt:

$$t_{F\mu} = t(\eta_{F\mu}) = 2 \cdot x_{F\mu}'(\eta_{F\mu}), \tag{12}$$

weil bei gleichem Rechengang die n–l restlichen Teil-Festreaktanzen $x_{Fv}(\eta)$, $v = 1\ldots\mu -1$, $\mu +1\ldots n$, deren Reaktanznullstellen nicht bei $\eta = \eta_{F\mu}$ liegen, formal bei dieser Frequenz der Steuerreaktanz zugeordnet werden können, die nach (11) keinen Beitrag für $t_{F\mu}$ liefert. Durch die konsequente Anwendung von Gleichung (11) kann nunmehr in leicht durchschaubarer Weise jede elementare Teil-Festreaktanz so festgelegt werden, dass sich ein vorgegebener Absolutwert $t_{F\mu}$ als Fixpunkt bei der Referenzfrequenz einstellt. Im folgenden Abschnitt wird dies an den bereits früher erwähnten Beispielen mit einem (Fig. 4) und zwei Fixpunkten (Fig. 5) verdeutlicht.

Als einfachste Festreaktanz $x_F(\eta)$ mit einer Reaktanznullstelle $\eta_F$ ist ein Serienschwingkreis geeignet:

$$x_F(\eta) = \eta\, l_F - 1/(\eta\, c_F) = l_F \frac{1}{\eta} (\eta^2 - \eta^2_F),$$
$$(\eta^2_F = \frac{1}{l_F c_F}), \tag{13}$$

$$x_F'(\eta_F) = 2 \cdot l_F, \tag{14}$$

$$t(\eta_F) = 2 \cdot x_F'(\eta_F) = 4 \cdot l_F \text{ entsprechend (12)} \tag{15}$$

oder entnormiert: $\tau_F(f_F) = 4 \cdot L_F/R_B$.    (16)

Ist die absolute Laufzeit im Fixpunkt bei der Frequenz $f = f_F$ als $\tau = \tau_F$ vorgegeben, so ist die Induktivität des Serienschwingkreises als

$$L_F = 0{,}25 \cdot R_B \cdot \tau_F \text{ (Kreuzgliedreaktanz)} \tag{17}$$

festzulegen und die Schwingkreiskapazität ergibt sich zu

$$C_F = 1/(\omega^2_F L_F). \tag{18}$$

Diese Verhältnisse sind unabhängig von einer parallel liegenden Steuerreaktanz $x_S(\eta)$, die keine Nullstelle bei $\eta = \eta_F$ aufweisen darf, sonst jedoch beliebiger Natur sein kann. Im einfachsten Fall besteht die Steuerreaktanz z.B. aus einer variablen Kapazität $c_S$.

In Fig. 4 sind für dieses Beispiel Laufzeitkurven dargestellt. Damit sich bei der Referenzfrequenz $f_F$ = 140 MHz die einstellungsunabhängige Gruppenlaufzeit $\tau_F$ = 10 ns ergibt, wird nach (17) die Induktivität (Kreuzglied) zu $L_F$ = 125 nH bestimmt; die Resonanzfrequenz des Serienschwingkreises $L_F$, $C_F$ beträgt $f_F$ = 140 MHz. Die als Steuerreaktanz fungierende Parallelkapazität $C_S$ wurde – in der Schaltung des Darlington-Allpasses nach Fig. 4a – von 2,5 pF bis 15 pF in Stufen von 2,5 pF variiert ($L_F$ = 250 nH). Wie Fig. 4 weiterhin zeigt, verlaufen alle entsprechenden Laufzeitkurven durch den Punkt $\tau_F$ = 10 ns, $f_F$ = 140 MHz; es handelt sich also um einen Fixpunkt.

Die in den Fig. 4a und 4b dargestellten Schaltungen sind theoretisch gleichwertig.

Laufzeitentzerrer mit zwei Fixpunkten sind ebenfalls möglich.

Wird die Festreaktanz der z.B. in Fig. 4b angegebenen, einen Laufzeit-Fixpunkt erzeugenden Schaltung um einen Serien-Schwingkreis erweitert (Fig. 5), so ergeben sich gemäss der Neuerung 2 Fixpunkte der Laufzeit, wie dies die ebenfalls in Fig. 5 gezeigte Schar von Laufzeitkurven erkennen lässt. Im Beispiel wurden folgende Schaltungsparameter gewählt:

$R_a = R_b = 50 \,\Omega$
$L_{F1} = L_{F2} = 50 \,nH \qquad C_S = 1 \dots 30 \,pF$
$f_{F1} = 100 \,MHz, f_{F2} = 180 \,MHz$
$\tau_{F1} = \tau_{F2} = 8 \,ns$ ($\tau$ – Fixpunkte nach (16) )

Eine Betrachtung der Laufzeitsteilheit $dt/d\eta$ im Fixpunkt $\eta_F, t_F$ ergibt folgendes.

In manchen Anwendungsfällen besteht neben der Forderung eines Laufzeit-Fixpunktes $t_F$ bei einer Referenzfrequenz $\eta_F$ auch der Wunsch nach einer vorgebbaren Laufzeitsteilheit k

$= \dfrac{dt}{d\eta} \quad \eta = \eta_F$, die entweder von der Einstellung des Entzerrers unabhängig – also konstant – sein soll oder gerade durch die Entzerreinstellung variiert werden soll. Zur Synthese entsprechender Schaltungen ist eine Aussage über den Zusammenhang zwischen Laufzeitsteilheit k, Festreaktanz $x_F(\eta)$ und Steuerreaktanz $x_S(\eta_F)$ nötig.

Die Berechnung der Laufzeitsteilheit K im Fixpunkt $\eta_F, t_F$ erfolgt folgendermassen.

Die Steilheit der Gruppenlaufzeit wird durch Differenzieren des Ausdruckes (10) nach der Frequenz gewonnen (Abkürzungen: ' einfache Ableitung nach der Frequenz, " zweifache Ableitung nach der Frequenz).

$$\frac{dt}{d\eta} =$$

$$= 2 \cdot \frac{\begin{array}{l}((x_F + x_S)^2 + x^2_F \cdot x_S{}^2)\,(x^2_F\, x_S{}'' + 2 \cdot x_F \cdot x_F{}'\, x_S{}' + 2\,x_F{}' \cdot x_S \cdot x_S{}' + x_F{}'' \cdot x_S{}^2) \\[6pt] - (x^2_F \cdot x_S{}' + x_F{}' \cdot x_S{}^2)\,(2 \cdot (x_F + x_S)\,(x_F{}' + x_S{}') + 2 \cdot x^2_F \cdot x_S \cdot x_S{}' + 2 \cdot x_F \cdot x_F{}' \cdot x^2_S)\end{array}}{(\,(x_F + x_S)^2 + x^2_F \cdot x^2_S)^2} \qquad (19)$$

Da vereinbarungsgemäss die Festreaktanz $x_F$ im Fixpunkt den Wert Null aufweist, vereinfacht sich der Ausdruck (19) für die Laufzeitsteilheit im Fixpunkt zu

$$k = \left.\frac{dt}{d\eta}\right|_{\eta = \eta_F} = \left.2 \cdot \frac{x_F{}'' \cdot x_S - 2 \cdot x_f{}'^2}{x_S}\right|_{\eta = \eta_F} \qquad (20)$$

Die Gleichung stellt einen eindeutigen Zusammenhang zwischen der Steuerreaktanz $x_S(\eta_F)$ und den Vorgaben Festreaktanz $x_F(\eta)$ und Laufzeitsteilheit dar. Die Steuerreaktanz $x_S(\eta_F)$ ist durch die erste und zweite Ableitung der Festreaktanz nach der Frequenz bei $\eta = \eta_F$ und durch die gewünschte Laufzeitsteilheit K bestimmt:

$$x_S(\eta_F) = 2 \frac{x_F{}'^2(\eta_F)}{x_F{}''(\eta_F) - k/2} \qquad (21)$$

Dieser Wert liegt im Bereich $0 < x_S(\eta_F) \leqq \infty$ und kann nicht Null sein, da voraussetzungsgemäss die Steuerreaktanz bei $\eta = \eta_F$ keine Nullstelle hat.

Laufzeitentzerrer mit konstanter Laufzeitsteilheit k in einem Fixpunkt $\eta_F, t_F$ haben folgende theoretische Bedingungen. Um eine einstellungsunabhängige Laufzeitsteilheit k im Fixpunkt $\eta_F, t_F$ zu gewährleisten, muss die Steuerreaktanz einstellungsunabhängig den durch Gleichung (21) gegebenen konstanten Wert $x_S(\eta_F)$ annehmen.

Realisierende Schaltungen erhält man zum Beispiel 1.) wenn die Steuerreaktanz in die Parallelschaltung einer Festreaktanz und einer variablen Reaktanz so aufgeteilt wird, dass diese Festreaktanz bei $\eta = \eta_F$ den geforderten Wert $x_S(\eta_F)$ aufweist und gleichzeitig die variable Reaktanz einstellungsunabhängig bei $\eta = \eta_F$ eine Unendlichkeitsstelle aufweist. Eine prinzipielle Schaltungsmöglichkeit ist in Fig. 6a angegeben; eine geeignete Schaltungsstruktur geht aus Fig. 6c hervor; 2.) wenn die Steuerreaktanz in die Serienschaltung eines Festanteils und eines variablen Anteils so aufgeteilt wird, dass der Festanteil bei $\eta = \eta_F$ den geforderten Wert $x_S(\eta_F)$ aufweist und gleichzeitig der variable Anteil einstellungsunabhängig bei $\eta = \eta_F$ eine Nullstelle besitzt. Die prinzipielle Schaltungsmöglichkeit ist in Fig. 6b angegeben.

Beispiele für Laufzeitentzerrer mit konstanter Laufzeitsteilheit k in einem Fixpunkt $\eta_F, t_F$ seien noch erläutert.

Zunächst eine Beispielserie für k = 0 mit einer kurzgeschlossenen Stichleitung als Festreaktanz.

In dieser Beispielserie für die Laufzeitsteilheit k = 0 (horizontale Tangente) wird eine ausgangsseitig kurzgeschlossene Stichleitung mit dem Wellenwiderstand W verwendet, die bei f = 140 MHz die elektrische Länge $b_0$ = 180° aufweist. Als Allpassschaltung wurde die z.B. in Fig. 7 mit angegebene Darlington-Struktur verwendet. Die Steuerreaktanz muss mit k = 0 den durch (21) gegebenen Wert aufweisen:

$$x_F(\eta) = 2 \cdot w \cdot tg(b_0 \cdot \eta) \qquad x_F(\eta_F) = 0 \qquad (22)$$

$$x_F{}'(\eta) = 2 \cdot w \cdot b_0 \cdot \frac{1}{\cos^2(b_0 \cdot \eta)} \qquad x_F{}'(\eta_F) = 2 \cdot w \cdot b_0 \qquad (23)$$

$$x_F''(\eta) = 4 \cdot w \cdot b_0^2 \cdot \frac{\sin(b_0 \cdot \eta)}{\cos^3(b_0 \cdot \eta)} \qquad x_F''(\eta_F) = 0 \qquad (24)$$

$$x_S(\eta_F) = \infty \qquad (25)$$

Da sich für $x_S(\eta_F)$ der einstellungsunabhängige Festwert $\infty$ ergibt, ist als Steuerreaktanz z.B. ein auf $\eta = \eta_F$ abgestimmter Parallelschwingkreis mit variablem $L_S/C_S$-Verhältnis geeignet. Die Laufzeit im Fixpunkt errechnet sich nach (11) zu

$$t_F = 2 \cdot x_F'(\eta_F) = 4 \cdot w \cdot b_0 \qquad (26)$$

und in entnormierter Form

$$\tau_F = \frac{1}{f_F} \cdot \frac{b_0}{\pi} \cdot \frac{W}{R_B} \qquad (27)$$

Die Figuren 7, 8, 9, 10 zeigen jeweils Laufzeitkurven für $C_S$-Einstellungen von 1, 10, 20, 30, 40, 50 pF. Der von Fig. zu Fig. unterschiedliche Parameter ist allein der Wellenwiderstand W der Fixleitung:

Fig. 7: $w = 0,5$   $W = 25\,\Omega$    $\tau_F = 7,143$ ns
Fig. 8: $w = 0,75$   $W = 37,5\,\Omega$    $\tau_F = 10,71$ ns
Fig. 9: $w = 1$   $W = 50\,\Omega$    $\tau_F = 14,29$ ns
Fig. 10: $w = 1,5$   $W = 75\,\Omega$    $\tau_F = 21,43$ ns

Der Vergleich der genannten Figuren zeigt einen grossen Einfluss des Wellenwiderstandes W auf die Form der Laufzeitkurven; alle Kurven verlaufen jedoch bedingungsgemäss mit horizontaler Tangente durch den Fixpunkt.

Eine Beispielserie für $k \neq 0$ mit einer kurzgeschlossenen Stichleitung als Festreaktanz sei ebenfalls besprochen.

In Fig. 12 ist unter anderem eine Schaltungsstruktur dargestellt, die geeignet ist, nicht nur eine vorgegebene Laufzeitsteilheit k für alle Laufzeitkurven zu realisieren, sondern die darüberhinaus auch die Variation der Laufzeitsteilheit k selbst ermöglicht. Da nach (21) der Wert $x_S(\eta_F)$ der Steuerreaktanz die Laufzeitsteilheit k in $\eta_F$, $t_F$ bestimmt – wobei $x_S(\eta_F) = \infty$ im Falle der kurzgeschlossenen Stichleitung als Festreaktanz einer horizontalen Tangente entspricht – muss nur dafür Sorge getragen werden, dass die Steuerreaktanz bei $\eta = \eta_F$ – unbeeinflusst von variablen Elementen – positive und negative Werte zur Änderung des Vorzeichens der Tangente annehmen kann. Ein solcher Zweipol ist beispielsweise ein in der Grundstellung (horizontale Tangente) auf die Referenzfrequenz $f_F$ abgestimmter Parallelschwingkreis. Durch Änderung der Schwinkreiskapazität nach kleineren und grösseren Werten lassen sich je nach Wunsch positive oder negative Reaktanzwerte verschiedener Grösse einstellen, die dann für die Laufzeitsteilheit im Fixpunkt nach Richtung und Grösse verantwortlich sind.

Die in Fig. 11 für $C_0 = 5$; 15; 30 pF dargestellte Laufzeitkurven-Serie zeigt anschaulich die entsprechenden Kurvenscharen mit $d\tau/df < 0$, $d\tau/df = 0$, $d\tau/df > 0$.

Weiterhin sei noch hingewiesen auf eine Beispielserie für $k = 0$ mit einem Serienschwingkreis als Festreaktanz.

Für einen Serienschwingkreis $l_F$, $c_F$ als Festreaktanz (Kreuzgliedschaltung) gelten folgende Zusammenhänge:

$$x_F(\eta) = \eta l_F - \frac{1}{\eta c_F} \quad ; \quad x_F(\eta_F) = 0 \qquad (28)$$

$$x_F'(\eta) = l_F + \frac{1}{\eta^2 c_F} \quad ; \quad x_F'(\eta_F) = 2\, l_F \qquad (29)$$

$$x_F''(\eta) = -\frac{2}{\eta^3 c_F} \quad ; \quad x_F''(\eta_F) = -2 \cdot \frac{l_F}{\eta_F} \qquad (30)$$

$$\text{nach (21): } x_S(\eta_F) = -16 \cdot \frac{l_F^2 \cdot \eta_F}{4 \cdot l_F + k \cdot \eta_F} \qquad (31)$$

Soll ein Parallelschwingkreis $l_0$, $c_0$ zur Steuerung der Tangentensteilheit im Fixpunkt dienen (Schaltung in Fig. 12), so ist dessen Reaktanz für $\eta = \eta_F$

$$x_0(\eta_F) = l_0 \cdot \eta_F^2 \cdot \frac{\eta_F}{\eta_0^2 - \eta_F^2} \qquad (32)$$

der oben ermittelten Steuerreaktanz (31) gleichzusetzen. Hieraus erhält man die Resonanzfrequenz des Parallelschwingkreises zu

$$\eta_0 = \eta_F \cdot \sqrt{\frac{1}{1 + \dfrac{l_0\,(4\,l_F + k\,\eta_F)}{16\,l_F^2}}}\,, \qquad (33)$$

bzw. die Laufzeitsteilheit aus den Schaltungselementen zu

$$k = 4 \cdot \frac{l_F}{\eta_F} \cdot \left[4\,\frac{l_F}{l_0} \cdot \left(\frac{\eta_F^2}{\eta_0^2} - 1\right) - 1\right]. \qquad (34)$$

Nach Gleichung (33) kann also die Resonanzfrequenz bei gewählter Induktivität $l_0$ so bestimmt werden, dass $\eta_v$ die gewünschte Laufzeitsteilheit k im Fixpunkt realisiert wird. Gleichung (35) gibt die Beziehung für die entnormierte Laufzeitsteilheit K in ns/MHz wieder:

$$K = \frac{4}{R_B} \cdot \frac{L_F}{f_F} \cdot \left[ 4 \cdot \frac{L_F}{L_0} \cdot \left( \frac{f_F^2}{f_0^2} - 1 \right) - 1 \right] \text{ in s ns/MHz} \qquad (35)$$

mit

$$f_0^2 = \frac{4}{4\pi^2 \cdot L_0 \cdot C_0} \qquad (36)$$

Für die in Fig. 12 gezeigten Laufzeitkurven wurde $L_0 = L_F$ angenommen; für die horizontale

$$
\begin{aligned}
C_0 &= 2,5 \text{ pF}; f_0 = 280,000 \text{ MHz}; K &= -0,5908 \text{ ns/MHz} \\
C_0 &= 12,5 \text{ pF}; f_0 = 125,220 \text{ MHz}; K &= 0 \quad\quad \text{ns/MHz} \\
C_0 &= 30 \quad \text{pF}; f_0 = 80,829 \text{ MHz}; K &= 1,034 \quad \text{ns/MHz},
\end{aligned}
$$

wenn berücksichtigt wird, dass der in Fig. 12 mit $L_F = 129,2$ nH gegebene Wert der Festkreisinduktivität wegen der Umrechnung auf die Kreuzgliedschaltung in (35) mit 2 multipliziert werden muss.

Ein Laufzeitentzerrer mit variabler Laufzeitsteilheit im Fixpunkt ergibt sich folgendermassen.

Die Laufzeitsteilheit k im Fixpunkt wird nach (20) durch den Wert der Steuerreaktanz $x_S(\eta_F)$ eingestellt. Um eine definierte Variation von k zu gewährleisten, muss die Steuerreaktanz eine entsprechende Frequenzabhängigkeit aufweisen. Als Beispiel möge die in Fig. 4 wiedergegebene Darstellung dienen.

## Patentansprüche

1. Laufzeitentzerrer mit stetig oder stufig veränderbarer Laufzeitcharakteristik und n (n = 1, 2, 3 ...) Fixpunkten der Laufzeit, bestehend aus Laufzeitentzerrer-Grundschaltungen mit verschwindender oder endlicher, aber konstanter Betriebsdämpfung, dadurch gekennzeichnet, dass die laufzeitbestimmende Kreuzgliedreaktanz ($X_K$) in ihrer Schaltungskonfiguration und in ihrer Bemessung derart gewählt ist, dass sie bei den Frequenzen der Fixpunkte ($f_F$) einstellungsunabhängig sowohl einen konstanten Wert als auch einen konstanten Differentialquotienten bezüglich der Frequenz f aufweist, und dass die laufzeitbestimmende Kreuzgliedreaktanz ($X_K$) aufgeteilt ist in die Parallelschaltung oder die Serienschaltung einer Festreaktanz ($X_F(\eta)$ ) mit n Reaktanznullstellen bzw. Reaktanzpolen, die bei allen Einstellungen des Laufzeitentzerrers konstant bleibt, und einer Steuerreaktanz ($X_S(\eta)$ ), die Schaltelemente mit veränderbaren Werten zur Variation der Laufzeitcharakteristik enthält, und dabei die n Reaktanznullstellen bzw. die n Reaktanzpole der Festreaktanz bei denjenigen n Referenzfrequenzen liegen, bei denen Fixpunkte der Laufzeit auftreten, und der absolute Wert eines Laufzeitfixpunktes ($f_F$) durch die erste Ableitung der Festreaktanz ($X_F$) nach der Frequenz (f) bei der aktuellen Referenzfrequenz – unabhängig von der Steuerreaktanz ($X_S$) – bestimmt ist.

2. Laufzeitentzerrer nach Anspruch 1, dadurch

Tangente ergibt sich dann: $f_0 = 125,220$ MHz und $C_0 = 12,5$ pF.

In Fig. 12 sind Laufzeitscharen für die Fälle $C_0$ = 2,5; 12,5:30 pF dargestellt. Für die entsprechenden Laufzeitsteilheiten im Fixpunkt erhält man mit Hilfe von Gleichung (35)

gekennzeichnet, dass der konstante Reaktanzwert den Wert Null hat.

3. Laufzeitentzerrer nach einem der vorhergehenden Ansprüche, dadurch gekennzeichnet, dass die Festreaktanz ($X_F$) mit n Nullstellen bzw. n Polen in die Parallelschaltung bzw. die Serienschaltung von m > 1 Teil-Festreaktanzen aufgespalten ist.

4. Laufzeitentzerrer nach einem der vorhergehenden Ansprüche, dadurch gekennzeichnet, dass die Festreaktanz mit n Nullstellen bzw. n Polen in die Parallelschaltung bzw. die Serienschaltung von n Teil-Festreaktanzen mit je einer Nullstelle bzw. einer Polstelle aufgespalten ist.

5. Laufzeitentzerrer nach einem der vorhergehenden Ansprüche, dadurch gekennzeichnet, dass der Wert der Steuerreaktanz ($X_S$) bei einer Referenzfrequenz (Frequenz eines Fixpunktes) durch die bei dieser Frequenz vorschreibbare Laufzeitsteilheit und die erste und zweite Ableitung der gewählten Festreaktanz ($X_F$) nach der Frequenz bei der aktuellen Referenzfrequenz festgelegt ist.

6. Laufzeitentzerrer nach einem der vorhergehenden Ansprüche, dadurch gekennzeichnet, dass auch Abschnitte von Übertragungsleitungen in die laufzeitbestimmende Kreuzgliedreaktanz ($X_K$) einbezogen sind.

## Revendications

1. Correcteur de temps de propagation possédant une caractéristique de temps de propagation variable continûment ou par paliers et n (n = 1, 2, 3 ...) points fixes du temps de propagation, constitué par des circuits de base présentant un affaiblissement de service du type s'évanouissant ou fini, mais constant, caractérisé par le fait que la configuration de montage et le dimensionnement de la réactance en treillis ($X_K$), qui détermine le temps de propagation, sont choisis de telle sorte que, pour les fréquences des points fixes ($f_F$), cette réactance possède, d'une manière indépendante du réglage, aussi bien une valeur constante qu'un quotient différentiel constant par rapport à la fréquence f, et que la réactance en treillis ($X_K$), qui détermine le temps de propagation, est subdivisée en le montage parallèle ou le montage série comprenant une réactance fixe $(X_F(\eta))$, qui comporte n points d'annulation ou pôles et conserve une valeur constante pour tous les réglages du correcteur de temps de propagation, et d'une réactance de commande $(X_S(\eta))$, qui contient des éléments de commutation possédant des valeurs variables et servant à modifier la caractéristique de temps de propagation, et que les n points d'annulation ou les n pôles de la réactance fixe sont associés aux n fréquences de référence, pour lesquelles les points fixes du temps de propagation apparaissent, et la valeur absolue d'un point fixe $(f_F)$ du temps de propagation est déterminée par la dérivée première de la réactance fixe $(X_F)$ par rapport à la fréquence (f), pour la fréquence réelle de référence – indépendamment de la réactance de commande $(X_S)$.

2. Correcteur de temps de propagation suivant la revendication 1, caractérisé par le fait que la valeur constante de la réactance est la valeur zéro.

3. Correcteur de temps de propagation suivant l'une des revendications précédentes, caractérisé par le fait que la réactance fixe $(X_F)$, qui comporte n points d'annulation ou n pôles, est subdivisée sous la forme du montage en parallèle ou du montage en série de m > 1 réactances fixes partielles.

4. Correcteur de temps de propagation suivant l'une des revendications précédentes, caractérisé par le fait que la réactance fixe, qui comporte n points d'anulation ou n pôles, est subdivisée sous la forme du montage en parallèle ou du montage en série de n réactances fixes partielles comportant chacune un point d'annulation ou un pôle.

5. Correcteur de temps de propagation suivant l'une des revendications précédentes, caractérisé par le fait que la valeur de la réactance de commande $(X_S)$ est fixée, pour une fréquence de référence (fréquence d'un point fixe), par la pente du temps de propagation, qui peut être prescrite pour cette fréquence, et par la dérivée première et la dérivée seconde de la réactance fixe choisie $(X_F)$ par rapport à la fréquence, pour la fréquence réelle de référence.

6.Correcteur de temps de propagation suivant l'une des revendications précédentes, caractérisé par le fait que des sections de lignes de transmission sont insérées dans la réactance en treillis $(X_K)$ déterminant le temps de propagation.

**Claims**

1. A delay equaliser having a delay characteristic adjustable continuously or in steps, and n (n = 1, 2, 3 . . .) delay check points, consisting of delay equaliser elementary circuits with negligible or finite but constant effective attenuation, characterised in that the circuit configuration and proportions of the lattice-type reactance $(X_K)$ determining the delay are selected such that it exhibits a constant value and a constant differential quotient with respect to the frequency f at the frequencies of the check points $(f_F)$ irrespective of setting, and in that the lattice-type reactance $(X_K)$ determining the delay is split into a parallel circuit or a series circuit of a fixed reactance $(X_F(\eta))$ with n reactance zero points or reactance poles which remains constant at all settings of the delay equaliser, and a control reactance $(X_S(\eta))$ which comprises circuit elements with variable values for variation of the delay characteristic, the n reactance zero points or the n reactance poles of the fixed reactance lying at the n reference frequencies at which delay check points occur, and the absolute value of a delay check point $(f_F)$ being determined by the first derivative of the fixed reactance $(X_F)$ with respect to the frequency (f) at the actual reference frequency, irrespective of the control reactance $(X_S)$.

2. A delay equaliser as claimed in Claim 1, characterised in that the constant reactance value is zero.

3. A delay equaliser as claimed in one of the preceding Claims, characterised in that the fixed reactance $(X_F)$ with n zero points or n poles is split into a parallel circuit or series circuit of m > 1 partial fixed reactances.

4. A delay equaliser as claimed in one of the preceding Claims, characterised in that the fixed reactance with n zero points or n poles is split into a parallel circuit or a series circuit of n partial fixed reactances each with one zero point or pole, as the case may be.

5. A delay equaliser as claimed in one of the preceding Claims, characterised in that the value of the control reactance $(X_S)$ at a reference frequency (frequency of a check point) is determined by the delay gradient that can be specified at this frequency and the first and second derivative of the selected fixed reactance $(X_F)$ with respect to the frequency at the actual reference frequency.

6. A delay equaliser as claimed in one of the preceding Claims, characterised in that sections of transmission lines are also included in the lattice-type reactance $(X_K)$ determining the delay.

## 1/13

### FIG 1a

$$a_B = 0 = \text{const.}$$

### FIG 1b

$$a_B = 6.02\,\text{dB} = \text{const.}$$

### FIG 1c

$$a_B = 12.04\,\text{dB} = \text{const.}$$

2/13

FIG 2

$jx_K$ = $jx_S$ $jx_F$

$jy_K$ = $jy_S$ $jy_F$

FIG 3a

$jx_K$ = $jx_S$ $jx_F$ = $jx_S$ $jx_{F1}$ $jx_{F2}$ $jx_{F3}$ $jx_{Fn}$

FIG 3b

$jy_K$ = $jy_S$ $jy_F$ = $jy_S$ $jy_{F1}$ $jy_{F2}$ $jy_{F3}$ $jy_{Fn}$

## 3/13

### FIG 4a

$L_F = 250 \text{ nH}$  $f_F = 140 \text{ MHz}$  $jX_F$

$C_S = 2,5 \ldots 15 \text{ pF}$  $jX_S$

1  1

$50\,\Omega$  $25\,\Omega$  $50\,\Omega$

### FIG 4b

$100\,\Omega$

1  1

$50\,\Omega$  $jX_S$  $f_F$  $50\,\Omega$

$C_S$  $L_F$  $jX_F$

$L_F = 62,5 \text{ nH}$

$f_F = 140 \text{ MHz}$

$C_S = 10 \ldots 60 \text{ pF}$

### FIG 4c

## 4/13

## FIG 5a

$$L_{F1} = L_{F2} = 50\,nH$$
$$f_{F1} = 100\,MHz$$
$$f_{F2} = 180\,MHz$$
$$C_S = 1\ldots 30\,pF$$

## FIG 5b

## FIG 6a

$$x_K(\eta)=$$

| Var. Anteil von $x_S$ $=\infty=$const. bei $\eta=\eta_F$ | Fester Anteil von $x_S$ be- stimmt k | Fest- Reaktanz $x_F$ |

## FIG 6b

$$x_K(\eta) =$$

| Var. Anteil von $x_S$ $=0=$const. bei $\eta=\eta_F$ | |
| Fester Anteil von $x_S$ bestimmt k | Festreaktanz $x_F$ |

## FIG 6c

$c_S$  $\eta_\infty$  $c_0$  $c_F$  $l_F$

$\eta_\infty=\eta_F$        $\eta_F$

0 149 793

6/13

FIG 7a

FIG 7b

## 7/13

### FIG 8a

$jX_S$

$jX_F$

$100\,\Omega$

$50\,\Omega$

$C_S$

$W = 37{,}5\,\Omega$
$b_0 = 180°$ bei $f_F$

$50\,\Omega$

$f_\infty$

$f_\infty = f_F$
$= \text{const.}$

### FIG 8b

ns

$C_S/pF$

50

40

30

20

10

1

$\tau$

$f_F$

$f/MHz \longrightarrow$

8/13

## FIG 9a

## FIG 9b

# FIG 10a

100Ω

$jX_S$

$jX_F$

50Ω

$C_S$

$f_\infty$

W = 50 Ω
$b_0$ = 180° bei $f_F$

50Ω

$f_\infty = f_F$
=const.

# FIG 10b

ns
25

$C_S$/pF

20

$\tau$

15

50
40
30
20
10
1

10

5

$f_F$

0

100    120    140    160    180

f/MHz

10/13

## FIG 11a

## FIG 11b

11/13

FIG 11c

FIG 11d

## 12/13

## FIG 12a

## FIG 12b

0 149 793

13/13

FIG 12c

FIG 12d

35